# EUROPÄISCHE PATENTSCHRIFT

(11) **EP 2 790 962 B1**
(45) Veröffentlichungstag und Bekanntmachung des Hinweises auf die Patenterteilung: **16.09.2015**
(21) Anmeldenummer: 12794188.8
(22) Anmeldetag: 16.11.2012
(51) Int. Cl.: B60N 2/44, B60N 2/48

(54) **KOPFSTÜTZE FÜR KRAFTFAHRZEUGSITZE**
HEAD REST FOR MOTOR VEHICLE SEATS
APPUIE-TÊTE POUR SIÈGES DE VÉHICULE AUTOMOBILE

(30) Priorität: 14.12.2011 DE 102011121120
(43) Veröffentlichungstag der Anmeldung: 22.10.2014
(73) Patentinhaber: Faurecia Autositze GmbH, 31655 Stadthagen (DE)
(72) Erfinder: REESE, Andreas, 31559 Hohnhorst (DE)
(74) Vertreter: Schober, Mirko
(86) Internationale Anmeldenummer: PCT/EP2012/004778
(87) Internationale Veröffentlichungsnummer: WO 2013/087144

(56) Entgegenhaltungen:
- EP-A2- 0 142 822
- DE-A1-102004 003 390
- DE-A1-102007 039 063
- JP-A- 2008 230 265
- US-A1- 2006 267 392
- US-A1- 2009 218 858
- US-B1- 6 398 303

## Beschreibung

### TECHNISCHES GEBIET

Die Erfindung betrifft eine Kopfstütze für Kraftfahrzeugsitze nach dem Oberbegriff des Anspruchs 1.

### STAND DER TECHNIK

Es ist z.B. aus JP 2008-230265 A eine gattungsgemäße Kopfstütze bekannt, bei der sich die Seitenteile durch Aufblasen keilförmiger Blähkörper nach vorne verschwenken lassen, um die seitliche Abstützung des Kopfes zu verbessern. Die Blähkörper sind dazu unterhalb der Seitenteile vorgesehen und drücken beim Befüllen jeweils gegen einen Hebel, dessen eines Ende gegen die Rückseite der Seitenteile verdrängt wird, während dessen anderes Ende gegen einen elastisch verformbaren Körper gedrückt wird, der im Hebel eine Rückstellkraft erzeugt, die den Hebel bei Leeren des Blähkörpers wieder zurück verschwenkt und den Blähkörper dadurch komprimiert.

Ebenfalls ist eine Kopfstütze aus DE 10 2004 003 390 A1 bekannt, bei der die beiden Seitenteile einer Kopfstütze durch Luftsäcke verstellt werden.

Weitere keilförmige Blähkörper unter den Seitenteilen von Kopfstützen sind z.B. aus EP 1 817 200 B1 und DE 10 2008 030 102 A1 bekannt.

Nachteilig an diesen Systemen ist, dass mehrere Blähkörper eingesetzt werden müssen, mindestens eines für jedes zu bewegende Teil der Kopfstütze, und deshalb ein komplizierter Aufbau erforderlich ist. Zum anderen sind die Blähkörper bei den bekannten Varianten seitlich der Kopfstütze angeordnet und so von außen zugänglich, so dass Gegenstände von außen die Funktion der Verstellung beeinträchtigen können.

### DIE ERFINDUNG

Aufgabe der vorliegenden Erfindung ist es daher, eine Kopfstütze der eingangs genannten Art anzugeben, die einfach aufgebaut ist und für die Realisierung der geschildeten Verstellfunktion kompakt und mit wenigen Teilen herstellbar ist.

Gelöst wird diese Aufgabe durch eine Kopfstütze mit den Merkmalen des Anspruchs 1. Vorteilhafte Ausführungsformen finden sich in den Unteransprüchen.

Die Erfindung kommt mit einem einzigen fluidbefüllbaren Hohlraum oder Hohlkörper, insbesondere einer Blase, aus, die hinter dem Mittelteil der Kopfstütze auf deren dem Kopf des Insassen abgewandten Seite vorgesehen ist. Dieser Hohlraum ist expandierbar, so dass er einen Hub ausübt. Im Hubbereich sind mit den Seitenteilen der Kopfstütze zusammenwirkende oder verbundene Hebelarmabschnitte vorgesehen. Durch Befüllen des Hohlkörpers werden die Hebelarmabschnitte verschwenkt und mit ihnen die Seitenteile. Es können auch, z.B. je Hebelarmabschnitt, ein oder mehrere Hohlkörper oder Hohlräume vorgesehen sein.

Außen liegende Blasen können so vermieden werden, insbesondere kann die Anordnung kompakt ausgeführt werden, z.B. kann der Hohlkörper im Bereich zwischen den Haltestangen der Kopfstütze, mit denen sie an der Rückenlehne eines Kraftfahrzeugsitzes befestigt ist, vorgesehen sein. Der Hohlkörper kann zudem zusammen mit den mit diesem zusammenwirkenden Hebelarmabschnitten in einem Gehäuse vorgesehen sein, so dass ein Eingreifen in die Kinematik von außen nicht möglich ist.

### KURZBESCHREIBUNG DER ZEICHNUNGEN

Die Erfindung wird nun anhand des in den Figuren 1 bis 3 gezeigten Ausführungsbeispiels schematisch näher erläutert.
- Figur 1 -: zeigt eine Frontansicht auf eine erfindungsgemäße Kopfstütze,
- Figur 2 -: zeigt eine Seitenansicht auf eine erfindungsgemäße Kopfstütze,
- Figur 3 -: zeigt einen Schnitt A-A durch die Kopfstütze.

### BESTER WEG ZUR AUSFÜHRUNG DER ERFINDUNG

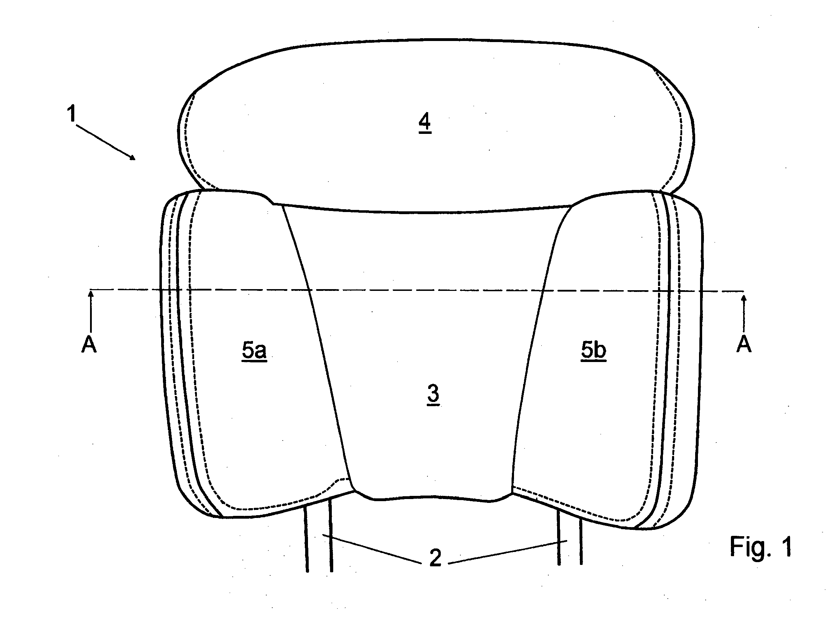

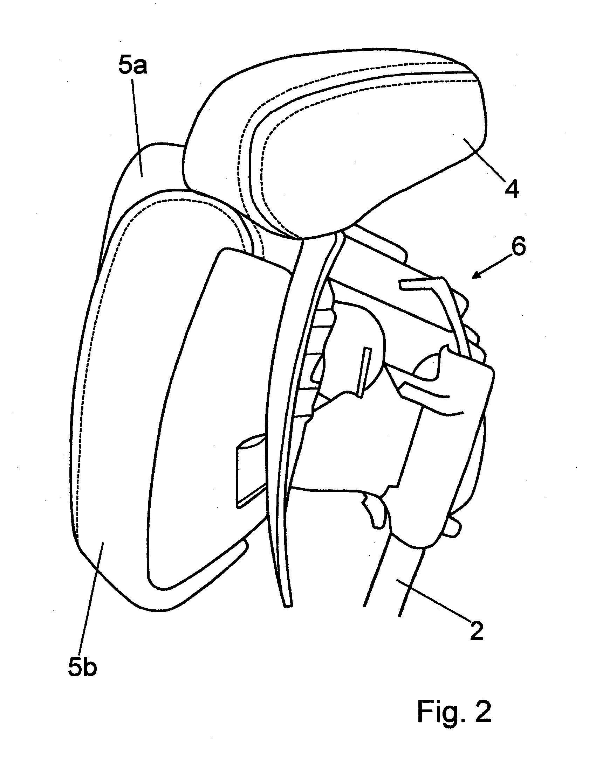

Die in den Figuren 1 und 2 gezeigte Kopfstütze 1 weist einen Mittelteil 3 auf, an dem der Kopf des Insassen (nicht gezeigt) anliegt. Seitlich davon, d.h. quer zur Fahrtrichtung gesehen, sind zwei bewegliche Seitenteile oder Seitenwangen 5a, 5b vorgesehen. Die Kopfstütze kann zudem noch ein hier nicht näher diskutiertes Oberteil 4 an ihrem dem Fahrzeugdach zugewandten Ende aufweisen, welches ebenfalls verstellbar ausgebildet sein kann. Die Seitenteile 5a, 5b lassen sich gegenüber dem Mittelteil verstellen, insbesondere nach vorn in Richtung des Kopfes des Insassen verschwenken. Die Kopfstütze wird über übliche Haltestangen 2 an der Rückenlehne eines Kraftfahrzeugsitzes (nicht gezeigt) befestigt.

Auf der Rückseite der Kopfstütze 1 ist, insbesondere mit dem Mittelteil verbunden, ein Gehäuse 6 vorgesehen, welches einen Bereich hinter der Kopfstütze, insbesondere auch die Haltestangen 2 umgibt.

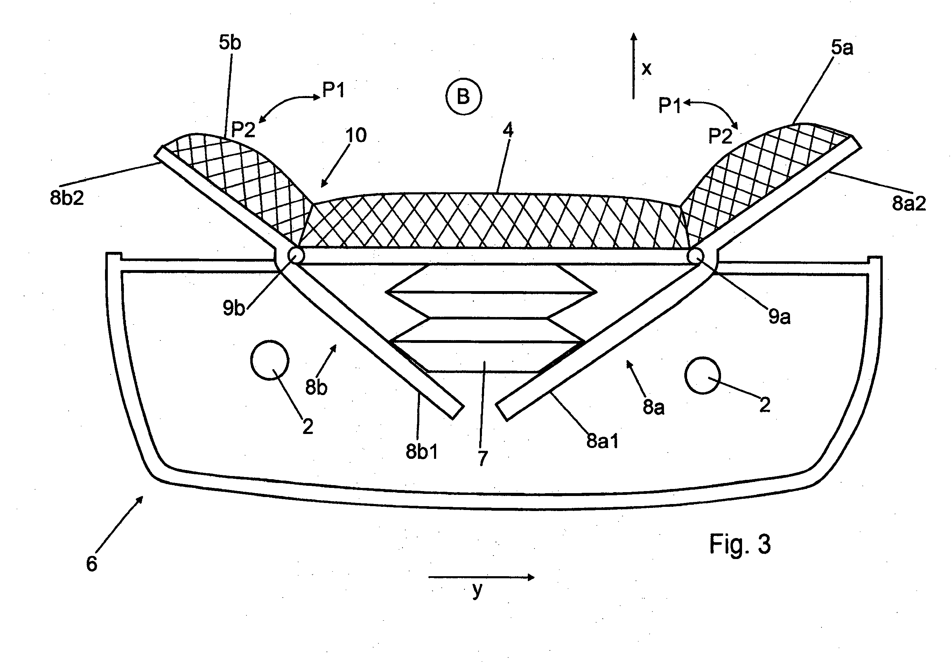

Dies wird im Schnitt der Figur 3 besonders deutlich. Zu erkennen ist der Mittelteil 4, der mit einem Gehäuse 6 verbunden ist. Der Mittelteil 4 ist mit seiner in Fahrtrichtung X weisenden Seite einem Bereich B zugewandt, in dem sich der Kopf des Insassen befindet. Die sich in Querrichtung Y beidseits des Mittelteils 4 an diesen anschließenden Seitenteile 5a, 5b sind um Schwenkachsen 9a, 9b schwenkbar gelagert. Die Schwenkachsen 9a, 9b, können als Schwenkzapfen ausgebildet sein. Mittelteil 4 und die Seitenteile 5a, 5b tragen auf Ihrer dem Bereich B zugewandten Seite entsprechende Polsterungen zur Abstützung und Anlage des Kopfes eines Insassen.

Die beiden Seitenteile 5a, 5b wirken mit jeweils einem Hebel 8a, 8b zusammen, bevorzugt sind die Seitenteile 5a, 5b jeweils mit zweiten Hebelarmabschnitten 8a2, 8b2 der Hebel 8a bzw. 8b verbunden. Die Hebel 8a, 8b sind an den Schwenkzapfen 9a bzw. 9b schwenkbar gelagert. Auf der dem jeweiligen Schwenkzapfen 9a, 9b abgewandten Seite der zweiten Hebelarmabschnitte befinden sich frei liegende erste Hebelarmabschnitte 8a1 bzw. 8b1. Auf der der Seite B abgewandten Seite des Mittelteils 4 ist ein fluidbefüllbarer Hohlkörper 7 vorgesehen, welcher bei Befüllung mit einem Fluid, das kann ein Gas, eine Flüssigkeit oder ein Gel sein, expandiert und beim Entleeren komprimierbar ist. Der Hohlkörper 7, bei dem es sich vorteilhaft um eine Blase, insbesondere eine Luftblase, handelt, weist folglich einen gewissen Hubbereich auf. Die ersten Hebelarmabschnitte 8a1, 8b1 sind so angeordnet, dass sie jedenfalls teilweise im Hubbereich des Hohlkörpers 7 liegen. Wird dieser expandiert, werden die Hebel 8a, 8b folglich in Richtung des Pfeils P1 verschwenkt und die Seitenteile bewegen sich auf den Kopf des Insassen bzw. den Kopfaufnahmebereich B der Kopfstütze zu.

Wird der Hohlkörper entleert, können die Hebel in Richtung P2 verschwenken und die Seitenteile von dem Kopfaufnahmebereich B weg bewegen. Dazu ist vorteilhafterweise vorgesehen, dass die Hebel 8a, 8b beim Bewegen in Richtung P1 vorgespannt werden, so dass sie bei Evakuierung des Hohlköpers 7 von selbst wieder in Richtung P2 schwenken. Diese Vorspannfunktion kann durch eine Feder (nicht gezeigt) ermöglicht werden. Andererseits kann auch die Elastizität der Polsterungen der Seitenteile 5a, 5b und des Mittelteils 4 ausgenutzt werden: Beim Verschwenken in Richtung P1 erhöht sich die Polsterpressung im Überhangsbereich 10 zwischen einem Seitenteil 5a, 5b und dem Mittelteil 4. Hierdurch wird beim Verschwenken in Richtung P1 eine Kraft aufgebaut, die der Schwenkbewegung entgegen wirkt und beim Kollabieren des Hohlköpers das Seitenteil wieder in Richtung P2 drückt.

Die Anordnung mit dem Hohlkörper 7 zwischen den Hebelarmabschnitten 8a1, 8b1 ist sehr kompakt, zudem wird nur ein Hohlkörper 7 benötigt, um beide Seitenteile 5a, 5b zu verstellen. Insbesondere kann hier bauraumsparend gearbeitet werden, indem die Anordnung aus Hebelarmabschnitten 8a1, 8b1 und dem Hohlkörper 7 zwischen den Haltestangen 2 der Kopfstütze Platz findet. Die gesamte Anordnung kann dann von einem Gehäuse 6 eingefasst werden, so dass keine mechanischen Bauteile von außen zugänglich oder in der Funktion von außen zu stören sind.

## Patentansprüche

1. Kopfstütze (1) für Kraftfahrzeugsitze mit einem Mittelteil (3) und beidseits des Mittelteils (3) angeordneten, gegenüber dem Mittelteil (3) verstellbaren Seitenteilen (5a, 5b) zur seitlichen Abstützung des Kopfes, wobei zur Betätigung der Verstellung wenigstens eines Seitenteils (5a, 5b) wenigstens ein fluidbefüllbarer Hohlkörper (7) vorgesehen ist, durch dessen Befüllung das wenigstens eine Seitenteil (5a, 5b) in Richtung (P1) des den Kopf aufnehmenden Bereichs (B) verschwenkt wird, wobei zwei um eine jeweilige Schwenkachse (9a, 9b) schwenkbare Hebelarme (8a, 8b) vorgesehen sind, welche jeweils einen ersten Hebelarmabschnitt (8a1, 8b1) und einen auf der gegenüber liegenden Seite des ersten Hebelarmabschnitts (8a1, 8b1) angeordneten zweiten Hebelarmabschnitt (8a2, 8b2) aufweisen, wobei der erste der Hebelarmabschnitte (8a1, 8b1) im Hubbereich des fluidbefüllbaren Hohlkörpers (7) liegt und der zweite der Hebelarmabschnitte (8a2, 8b2) mit einem zugehörigen Seitenteil (5a, 5b) zusammenwirkt,
**dadurch gekennzeichnet,**
**dass** der fluidbefüllbare Hohlkörper (7) auf der dem Kopfaufnahmebereich (B) abgewandten Seite des Mittelteils (4) angeordnet ist.

2. Kopfstütze (1) nach Anspruch 1,
**dadurch gekennzeichnet,**
**dass** der zweite Hebelarmabschnitt (8a2, 8b2) mit dem zugehörigen Seitenteil (5a, 5b) verbunden ist.

3. Kopfstütze (1) nach einem der vorigen Ansprüche,
**dadurch gekennzeichnet,**
**dass** der Hohlkörper (7) und die ersten Hebelarmabschnitte (8a1, 8b1) in einem Gehäuse (6) aufgenommen sind.

4. Kopfstütze (1) nach Anspruch 3,
**dadurch gekennzeichnet,**
**dass** das Gehäuse (6) am Mittelteil (4) angebracht ist.

5. Kopfstütze (1) nach einem der vorigen Ansprüche,
**dadurch gekennzeichnet,**
**dass** die Schwenkachsen (9a, 9b) durch am Gehäuse (6) oder am Mittelteil (4) vorgesehene Schwenkzapfen gebildet sind.

6. Kopfstütze (1) nach einem der vorigen Ansprüche,
**dadurch gekennzeichnet,**
**dass** der Hohlkörper (7) eine Luftblase ist.

7. Kraftfahrzeugsitz mit einer über Haltestangen (2) an diesem befestigten Kopfstütze (1) nach einem der vorigen Ansprüche,
**dadurch gekennzeichnet,**
**dass** der Hohlkörper (7) in einem Bereich zwischen den Haltestangen (2) vorgesehen ist.

8. Kraftfahrzeugsitz nach Anspruch 7,
**dadurch gekennzeichnet,**
**dass** der Hohlkörper (7), die ersten Hebelarmabschnitte (8a1, 8a2) und wenigstens Abschnitte der Haltestangen (2) von einem Gehäuse (6) umgeben sind.

## Claims

1. Head rest (1) for motor vehicle seats having a centre part (3) and side parts (5a, 5b) which are arranged on either side of the centre part (3) and are displaceable relative to the centre part (3) for laterally supporting the head, wherein in order to operate the adjustment of at least one side part (5a, 5b) at least one fluid-fillable hollow body (7) is provided and when filled the at least one side part (5a, 5b) is pivoted in the direction (P1) of the region (B) receiving the head, wherein two lever arms (8a, 8b) are provided which are able to pivot about respective pivot axes (9a, 9b) and which each have a first lever arm section (8a1, 8b1) and a second lever arm section (8a2, 8b2) which is arranged on the opposite side of the first lever arm section (8a1, 8b1), wherein the first of the lever arm sections (8a1, 8b1) lies in the lifting region of the fluid-fillable hollow body (7) and the second of the lever arm sections (8a2, 8b2) interacts with an associated side part (5a, 5b),
**characterised in that**
the fluid-fillable hollow body (7) is arranged on the side of the centre part (4) which faces away from the head-receiving region (B).

2. Head rest (1) according to claim 1
**characterised in that**
the second lever arm section (8a2, 8b2) is connected to the associated side part (5a, 5b).

3. Head rest (1) according to one of the preceding claims
**characterised in that**
the hollow body (7) and the first lever arm sections (8a1, 8b1) are accommodated in a housing (6).

4. Head rest (1) according to claim 3
**characterised in that**
the housing (6) is attached to the centre part (4).

5. Head rest (1) according to one of the preceding claims
**characterised in that**
the pivot axes (9a, 9b) are formed by pivot pins provided on the housing (6) or on the centre part (4).

6. Head rest (1) according to one of the preceding claims
**characterised in that**
the hollow body (7) is an air bubble.

7. Motor vehicle seat with a head rest (1) according to one of the preceding claims fastened thereon by retaining rods (2)
**characterised in that**
the hollow body (7) is provided in a region between the retaining rods (2).

8. Motor vehicle seat according to claim 7
**characterised in that**
the hollow body (7), the first lever arm sections (8a1, 8a2) and at least sections of the retaining rods (2) are enclosed by a housing (6).

## Revendications

1. Appuie-tête (1) pour sièges de véhicules automobiles comprenant une pièce centrale (3) et des pièces latérales (5a, 5b) qui, disposées des deux côtés de la pièce centrale (3), peuvent être déplacées par rapport à la pièce centrale (3) pour soutenir la tête latéralement, sachant que, pour l'actionnement du déplacement d'au moins l'une des pièces latérales (5a, 5b), est prévu au moins un corps creux (7) qui peut être rempli de fluide, et que, lors du remplissage de celui-ci, la pièce latérale (5a, 5b) au moins prévue est pivotée dans la direction (P1) de la zone (B) recevant la tête, sachant que sont prévus deux bras de levier (8a, 8b) qui, pivotant chacun autour d'un axe de pivotement respectif (9a, 9b), présentent chacun une première section de bras de levier (8a1, 8b1) et une deuxième section de bras de levier (8a2, 8a2), disposée sur le côté opposé de la première section de bras de levier (8a1, 8b1), la première des sections de bras de levier (8a1, 8b1) étant située dans la zone de course du corps creux (7), pouvant être rempli de fluide, et la deuxième des sections de bras de levier (8a2, 8b2) coopérant avec une pièce latérale (5a, 5b) associée,
**caractérisé en ce que**
le corps creux (7), pouvant être rempli de fluide, est disposé sur le côté de la pièce centrale (4) opposé à la zone (B) recevant la tête.

2. Appuie-tête (1) selon la revendication 1,
**caractérisé en ce que**
la deuxième section de bras de levier (8a2, 8b2) est reliée à la pièce latérale associée (5a, 5b).

3. Appuie-tête (1) selon l'une des revendications précédentes,
**caractérisé en ce que**
le corps creux (7) et les premières sections de bras de levier (8a1, 8b1) sont logés dans un boîtier (6).

4. Appuie-tête (1) selon la revendication 3,
**caractérisé en ce que**
le boîtier (6) est installé sur la pièce centrale (4).

5. Appuie-tête (1) selon l'une des revendications précédentes,
**caractérisé en ce que**
les axes de pivotement (9a, 9b) sont formés par des tourillons qui sont prévus sur le boîtier (6) ou sur la pièce centrale (4).

6. Appuie-tête (1) selon l'une des revendications précédentes,
**caractérisé en ce que**
le corps creux (7) est une poche d'air.

7. Siège de véhicule automobile avec un appuie-tête (1) selon l'une des revendications précédentes qui est fixé sur lui par l'intermédiaire de barres de retenue (2),
**caractérisé en ce que**
le corps creux (7) est prévu dans une région située entre les barres de retenue (2).

8. Siège de véhicule automobile selon la revendication 7,
**caractérisé en ce que**
le corps creux (7), les premières sections de bras de levier (8a1, 8a2) et au moins des sections des barres de retenue (2) sont entourés d'un boîtier (6).
